# EUROPÄISCHE PATENTSCHRIFT

(11) **EP 1 989 337 B1**
(45) Veröffentlichungstag und Bekanntmachung des Hinweises auf die Patenterteilung: **13.07.2011**
(21) Anmeldenummer: 07722926.8
(22) Anmeldetag: 24.02.2007
(51) Int. Cl.: C22C 9/04, F16D 23/02

(54) **MESSINGLEGIERUNG SOWIE SYNCHRONRING**
BRASS ALLOY AND SYNCHRONIZING RING
ALLIAGE DE LAITON ET BAGUE DE SYNCHRONISATION

(30) Priorität: 01.03.2006 DE 102006009396
(43) Veröffentlichungstag der Anmeldung: 12.11.2008
(73) Patentinhaber: Diehl Metall Stiftung & Co. KG, 90552 Röthenbach (DE)
(72) Erfinder: HOLDERIED, Meinrad, 91338 Igensdorf (DE); GAAG, Norbert, 91207 Lauf (DE)
(74) Vertreter: Diehl Patentabteilung
(86) Internationale Anmeldenummer: PCT/EP2007/001614
(87) Internationale Veröffentlichungsnummer: WO 2007/101571

(56) Entgegenhaltungen:
- EP-A- 1 712 648
- WO-A-2005/054526
- DE-A1- 3 626 435
- DE-A1- 3 805 794
- DE-B- 1 194 153
- GB-A- 2 049 727
- JP-A- 63 238 257
- WAHEED A ET AL: "MICROSTRUCTURE AND WEAR OF SOME HIGH-TENSILE BRASSES" JOURNAL OF MATERIALS SCIENCE, SPRINGER / BUSINESS MEDIA, DORDRECHT, NL, Bd. 29, Nr. 6, 15. März 1994 (1994-03-15), Seiten 1692-1699, XP000433027 ISSN: 0022-2461
- ANONYM: "Diehl 470, Diehl 474, Messing mit Hochleistungseigenschaften"[Online] 2005, XP002433869 Gefunden im Internet: URL:www.diehlmetall-messing.de/uploads/tx- clfiles/Diehl_470_HT_Diehl_474_HT.pdf> [gefunden am 2007-05-15]

## Beschreibung

Die Erfindung bezieht sich auf eine verschleißbeständige Messinglegierung sowie auf einen hieraus gefertigten Synchronring.

Für Kupplungen, Bremsen oder Getriebe werden in der Automobiltechnik häufig Reibpartner aus Metall eingesetzt. In einem mechanischen Getriebe werden insbesondere metallische Synchronringe eingesetzt, die während eines Gangwechsels die unterschiedlichen Geschwindigkeiten von Getriebewelle und Gangrad aufeinander synchronisieren. Insbesondere in Getrieben für hoch motorisierte Fahrzeuge unterliegen die Synchronringe aufgrund der hohen Reibbelastung einem erhöhten Verschleiß. Gleiches gilt für automatisch beschaltete Getriebe, bei denen hohe Schaltkräfte zur Anwendung kommen. Bevorzugt werden Synchronringe aus einer Messinglegierung gefertigt.

Eine verschleißbeständige Messinglegierung für einen Synchronring ist beispielsweise aus der DE 37 35 783 C1 bekannt.

Weiter ist aus der DE 36 26 435 A1 eine Messinglegierung mit hoher Verschleißfestigkeit bekannt, die sich zu einer Anwendung in Gleitlagern oder Lagerbuchsen eignet. Bei einem Kupfer-Anteil bis zu 90 Gew.% werden die gewünschten Eigenschaften durch die Ausscheidung feiner intermetallischer Phasen von Mangan und Phosphor erreicht. Hierzu wird ein Verhältnis von Mangan zu Phosphor von größer 3:1 eingestellt.

Auch aus der DE 11 94 153 B ist eine Messinglegierung hoher Festigkeit und Härte bekannt. Diese weist einen Mangan-Gehalt bis zu 20 Gew.-% auf. Aufgrund des hohen Mangan-Gehalts ergibt sich eine gute Verarbeitbarkeit. Die Messinglegierung eignet sich wiederum als ein Lagerwerkstoff.

Es ist Aufgabe der Erfindung, eine verschleißbeständige Messinglegierung anzugeben, die sich insbesondere für einen Synchronring eignet. Weiter ist es Aufgabe der Erfindung, einen verschleißbeständigen Synchronring anzugeben.

Die erstgenannte Aufgabe wird erfingdungsgemäß gelöst durch eine Messinglegierung umfassend 55 - 68 Gew.-% Kupfer, 3 - 6 Gew.% Aluminium, 8 -14 . Gew.% Mangan, 1,5 - 3 Gew.-% Phosphor, 0 - 1 Gew.-% Blei, unvermeidbare Verunreinigungen sowie als Rest Zink.

Umfangreiche Untersuchungen haben ergeben, dass eine Messinglegierung mit den angegebenen Anteilen an Mangan und Phosphor einen hohen Verschleißwiderstand aufweist und sich aufgrund der für einen Gießvorgang geeigneten Viskosität ihrer Schmelze auch großtechnisch herstellen lässt. Die Härtewerte der Messinglegierung mit den angegebenen Komponentenanteilen bewegen sich in einem Bereich zwischen 168 und 229 HB (gemessen nach DIN EN ISO 6506).

Mit den erreichten Härtewerten und Verschleißwiderständen ist die beanspruchte Messinglegierung geeignet, als Synchronring auch höheren Belastungen in einem Getriebe standzuhalten. Für Synchronringe eingesetzte vergleichbare Messinglegierungen gemäß Stand der Technik weisen Verschleißwiderstände zwischen 400 und 600 km/g bei ähnlichen Härtewerten auf.

Überraschend hat es sich weiter gezeigt, dass die angegebene Messinglegierung eine hohe Verschleißbeständigkeit auch unter den in Getrieben aufgrund der gesteigerten Beanspruchung oft eingesetzten hochadditivierten Getriebeöle aufweist. In Getriebeölen enthaltene Additive können nämlich Auswirkungen auf die Verschleißbeständigkeit der für den Synchronring eingesetzten Messinglegierung haben.

Ein Synchronring kann aus der angegebenen Messinglegierung in bekannter Weise durch Gießen, Strangpressen und Schmieden sowie gegebenenfalls Nachglühen hergestellt werden.

Blei kann ohne störenden Einfluss bis zu einem Anteil von 1 Gew.% enthalten sein oder beigemengt werden, um die Zerspanbarkeit zu verbessern. Zur Herstellung der Messinglegierung können insofern Messinge aus einem Recycling-Rücklauf verwendet werden. Diese enthalten in der Regel einen gewissen Anteil an Blei.

Für das Gießen der Messinglegierung ist das Entstehen einer zähflüssigen Schmelze hinderlich. Ebenso ist eine vermehrte Schlackenbildung zu vermeiden, da diese aufwändig entfernt werden muss. Es hat sich gezeigt, dass sich die Zähigkeit der Schmelze und die Schlackenbildung verringern lässt, wenn der Messinglegierung Aluminium zugesetzt wird oder eher ein geringer Phosphoranteil enthalten ist. Dabei kann ein höherer Phosphoranteil durch einen höheren Gehalt an Aluminium ausgeglichen werden. Für eine hohe Verschleißbeständigkeit bei guter Gießbarkeit umfasst die Messinglegierung die genannten Anteile an Aluminium, Mangan und Phosphor.

In einer weiteren vorteilhaften Ausgestaltung hinsichtlich der Verschleißbeständigkeit und hinsichtlich einer großtechnischen Herstellung umfasst die Messinglegierung vorteilhafterweise 59 - 64 Gew.-% Kupfer, 3 - 4 Gew.% Aluminium, 9 - 11 Gew.% Mangan und 1,9 - 2,5 Gew.% Phosphor.

Es hat sich weiter gezeigt, dass es für die Verschleißbeständigkeit und Härte der Messinglegierung vorteilhaft ist, wenn der Anteil der β-Phase des Kupfer-Zink-Gemisches im Gefüge zwischen 40 und 50% beträgt. In der β-Phase verteilen sich die Kupfer- und Zink-Atome gemäß einer Cäsium-Chlorid-Struktur auf die Gitterplätze eines kubisch raumzentrierten Gitters.

Weiter hat es sich als vorteilhaft hinsichtlich der gewünschten Eigenschaften herausgestellt, wenn in einem Querschnitt der Messinglegierung der Flächenanteil der intermetallischen Phasen im Gefüge zwischen 11 % und 17% beträgt. Die intermetallischen Phasen, wie z.B. Mangan-Phosphide, sind dabei in einer Matrix der Kupfer-Zink-Legierung eingebettet.

Insbesondere zeigt die Messinglegierung einen vorteilhaften Verschleißwiderstand, wenn die intermetallischen Phasen im Gefüge überwiegend eine gestreckte, längliche Form besitzen.

Die zweitgenannte Aufgabe hinsichtlich eines Synchronrings wird erfindungsgemäß durch einen Synchronring gelöst, der aus einer Messinglegierung besteht, die 55 - 68 Gew.-% Kupfer, 3 - 6 Gew.-% Aluminium, 8 - 14 Gew.% Mangan, 1,5 - 3 Gew.% Phosphor, 0 - 1 Gew.% Blei, unvermeidbare Verunreinigungen sowie als Rest Zink umfasst. Der Synchronring wird - wie bereits erwähnt - aus der Messinglegierung durch Gießen, Strangpressen, Schmieden sowie gegebenenfalls Nachglühen hergestellt.

Ausführungsbeispiele der Erfindung werden durch die nachfolgenden Beispiele sowie durch eine Zeichnung näher erläutert. Dabei zeigt:
- Fig. 1: in einem Diagramm den Verschleißwiderstand einer beispielhaften Messinglegierung in verschiedenen Getriebeölen und
- Fig. 2: einen Synchronring für ein mechanisches Getriebe.

Als Ausführungsbeispiele für die angegebene Messinglegierung wurden insgesamt vier Versuchslegierungen unterschiedlicher Zusammensetzung hergestellt.

Für realistische Messergebnisse wurde hierbei die Herstellung eines Synchronringes simuliert. Dabei wurden zunächst die einzelnen Legierungskomponenten mit den gewünschten Anteilen aufgeschmolzen und die entstandene Schmelze bei einer Temperatur zwischen 1.020 und 1.060°C mit einem Durchmesser von 35 mm in Sand gegossen. Anschließend wurde das Gussstück auf einen Durchmesser von 24 mm abgedreht. In einem weiteren Schritt wurde ein Strangpressen durch eine Warmverformung des abgedrehten Gussstückes von einem Durchmesser von 24 mm auf einen Durchmesser von 12 mm bei einer Temperatur zwischen 700 und 750°C simuliert. Weiter wurde das Schmieden des Synchronrings durch Stauchen von aus dem vorbehandelten Gussstück hergestellten 2 cm hohen Zylindern auf 1 cm bei einer Temperatur von ca. 750°C simuliert. Abschließend wurden die gestauchten Zylinder bei einer Temperatur von 275°C für fünf Stunden geglüht.

Die Zusammensetzung der vier derart hergestellten Versuchslegierungen wird aus der nachfolgenden Tabelle 1 ersichtlich. Dabei sind die Anteile der einzelnen Legierungskomponenten jeweils in Gew.-% aufgeführt.

**Tabelle 1**

| **Versuchslegierung Nr.** | **Kupfer** | **Mangan** | **Phosphor** | **Aluminium** | **Zink** |
|---|---|---|---|---|---|
| 1 | 57,5 | 10 | 2,25 | 2 | Rest |
| 2 | 60,35 | 10 | 2,25 | 3 | Rest |
| 3 | 61,78 | 10 | 2,25 | 3,5 | Rest |
| 4 | 63,21 | 10 | 2,25 | 4 | Rest |

Die nach DIN EN ISO 6506 jeweils bestimmte Härte der Versuchslegierungen kann Tabelle 2 entnommen werden.

**Tabelle 2**

| **Versuchslegierung Nr.** | **Härte HB** |
|---|---|
| 1 | 201 |
| 2 | 168 |
| 3 | 187 |
| 4 | 229 |

Aus den ermittelten Härtewerten wird ersichtlich, dass sich die angegebene Messinglegierung für einen Einsatz unter hohen Belastungen als Synchronring in einem Getriebe eignet. Die Härtewerte entsprechen denjenigen Härtewerten vergleichbarer, für Synchronringe bereits eingesetzter Messinglegierungen.

### Beispiel 1:

In einem ersten Versuch wurde der Verschleißwiderstand der Versuchslegierungen bei gleichzeitigem Einsatz zweier Getriebeöle untersucht. Als Getriebeöle wurde ein synthetisches Öl der Viskositätsklasse SAE75 der Klassifikation API GL4 (Öl 1) und ein synthetisches Öl der Viskositätsklasse SAE75W85 der Klassifikation API GL4 (Öl 2) verwendet. Bei nach API (American Petrol Institute) klassifizierten Getriebeölen geben die GL-Klassen den Anwendungsbereich an. Getriebeöle der Klasse GL4 und GL5 sind beispielsweise für Kfz üblich. Die Bezeichnungen SAExx - Wyy charakterisieren die Viskositätsklasse von Getriebeölen.

Der Verschleißwiderstand der Versuchslegierungen wurde jeweils in km/g in einer Reichert-Verschleißwaage mit einer Gleitgeschwindigkeit von 1,6 m/sek und einer Belastung von 52 N/mm² nach einer insgesamt gelaufenen Strecke von 2.500 m bestimmt. Hierbei wird ein Messingstift aus der jeweiligen Versuchslegierung mit einem Durchmesser von 2,7 mm mit der angegebenen Belastung auf einen umlaufenden Stahlring gedrückt. Das jeweilige Getriebeöl wurde auf den Stahlring aufgebracht. Die Messungen wurden jeweils bei einer Öltemperatur von 90°C durchgeführt.

Als Vergleichslegierung wird eine aus der DE 37 35 783 C1 entnehmbare, bekanntermaßen verschleißbeständige Messingegierung der Zusammensetzung 55 Gew.-% Kupfer, 6,8 Gew.-% Nickel, 3,7 Gew.-% Aluminium, 2,3 Gew.-% Silizium, 0,8 Gew.-% Eisen, einem Rest Zink sowie unvermeidbare Verunreinigungen herangezogen. Der Verschleißwiderstand der Vergleichslegierung wurde in gleicher Weise wie der der Versuchslegierungen ermittelt. In Tabelle 3 sind die ermittelten Werte des jeweiligen Verschleißwiderstandes der Versuchslegierungen in % des ermittelten Verschleißwiderstands der Vergleichslegierung dargestellt.

**Tabelle 3**

| | **ÖI 1** | **ÖI 2** |
|---|---|---|
| **Versuchsleg. Nr.** | **Verschleißwiderst in %** | **Verschleißwiderst. In %** |
| 1 | 761 | 338 |
| 2 | 618 | 317 |
| 3 | 657 | 329 |
| 4 | 503 | 239 |

Es ergibt sich überraschend, dass die Versuchslegierungen bei einer Messung mit Getriebeölen gegenüber einer bekanntermaßen verschleißbeständigen Vergleichslegierung einen deutlich erhöhten Verschleißwiderstand aufweisen. Diese vorteilhafte Eigenschaft ist durch die angegebenen Merkmale der beschriebenen Messinglegierung gewährleistet.

### Beispiel 2:

In einem weiteren Versuch wird der Verschleißwiderstand der Versuchslegierung 3, wie in Beispiel 1 angegeben, für weitere Getriebeöle untersucht. Ebenfalls wird der Verschleißwiderstand für die in Beispiel 1 erwähnte Vergleichslegierung unter Verwendung dieser Getriebeöle ermittelt.

Die Getriebeöle wiesen folgende Charakteristik auf:
Öl 3:
   SAE75W-80, mineralisch; API GL4
Öl 4:
   SAE80W-90, mineralisch; API GL3
Öl 5:
   SAE75W; synthetisch, API GL4
Öl 6:
   SAE75W, teilsynthetisch, API GL4
Öl 7:
   ATF bzw. Automatiköl

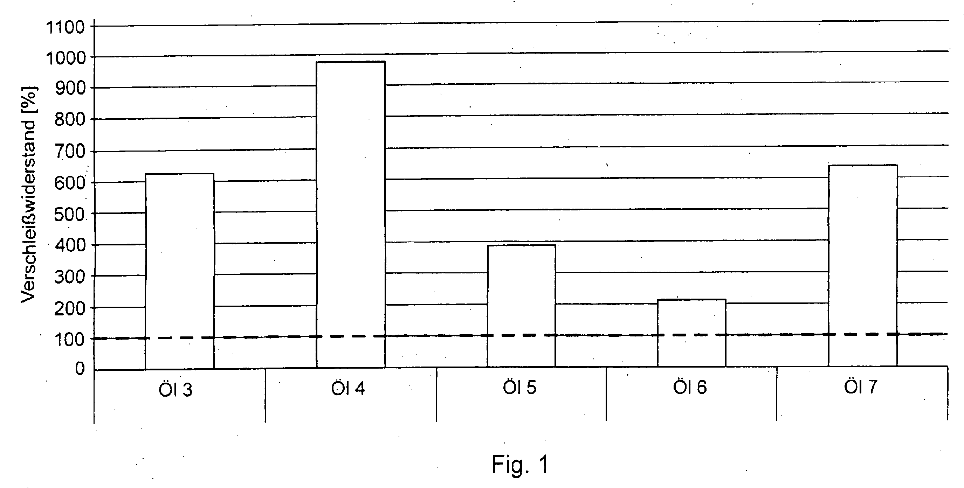

In Fig. 1 sind die ermittelten Verschleißwiderstände der Versuchslegierung 3 in % relativ zu dem jeweils ermittelten Verschleißwiderstand der Vergleichslegierung jeweils für die verschiedenen Öle dargestellt. Dabei ist der prozentuale Verschleißwiderstand entlang der Y-Achse aufgetragen. Die verschiedenen Öle sind entlang der X-Achse angeordnet. Der für die Vergleichslegierung ermittelte Verschleißwiderstand ist durch die 100%-Linie gekennzeichnet. Man erkennt deutlich, dass die Versuchslegierung 3 in allen untersuchten Getriebeölen einen gegenüber der Vergleichslegierung deutlich erhöhten Verschleißwiderstand aufweist. Die angegebene Messinglegierung kann somit insbesondere für die hohen Belastungen eines Synchronringes in einem Getriebe eingesetzt werden, wie sie sich in der Realität ergeben.

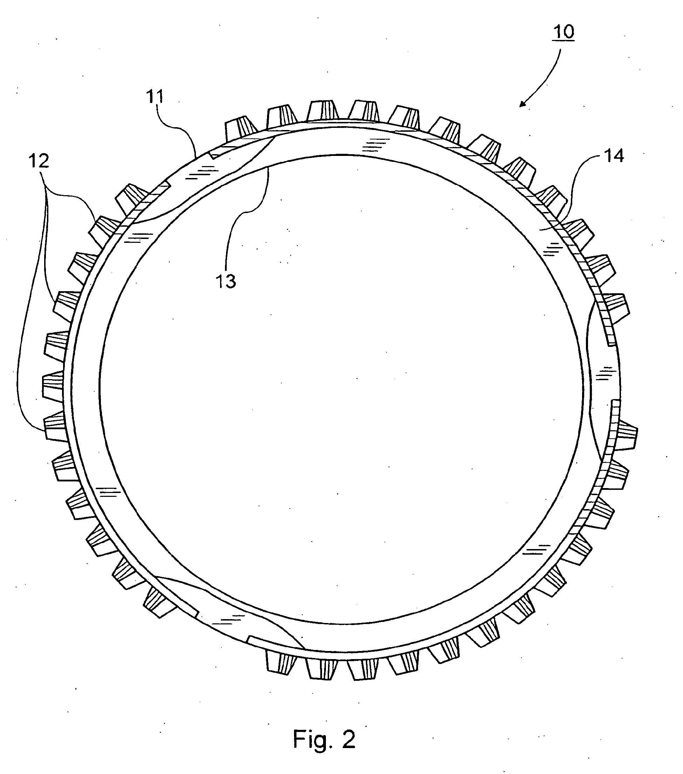

In Fig. 2 ist ein Synchronring 10 dargestellt, der durch Schmieden aus einer angegebenen Messinglegierung hergestellt ist. Am Außenumfang 11 des Synchronrings 10 sind Zähne 12 angebracht, die während des Synchronisiervorgangs zwischen dem Gangrad und der Getriebewelle eines Getriebes mit einer Schiebemuffe in Wirkverbindung stehen. Am Innenumfang 13 des Synchronrings 10 befindet sich eine konische Reibfläche 14, die während des Schaltvorgangs mit einer konischen Gegenfläche des Gangrades in Kontakt gerät. Durch die Reibung der Reibpartner wird deren Relativgeschwindigkeit zueinander verringert, wodurch schließlich eine Synchronisation stattfindet. Nach erfolgter Synchronisation kann die Schiebemuffe durch die Zähne 12 des Synchronrings 10 hindurchgleiten, wodurch eine formschlüssige Verbindung zwischen der Antriebs- und der Abtriebswelle des Getriebes hergestellt wird.

### Bezugszeichenliste

- 10: Synchronring
- 11: Außenumfang
- 12: Zähne
- 13: Innenumfang
- 14: Reibfläche

## Patentansprüche

1. Messinglegierung umfassend 55 - 68 Gew.% Kupfer, 3 - 6 Gew.% Aluminium, 8 -14 Gew.% Mangan, 1,5 - 3 Gew.-% Phosphor, 0 - 1 Gew.-% Blei, unvermeidbare Verunreinigungen sowie als Rest Zink.

2. Messinglegierung nach Anspruch 1,
wobei 59 - 64 Gew.% Kupfer, 3 - 4 Gew.-% Aluminium, 9 - 11 Gew.% Mangan und 1,9 - 2,5 Gew.-% Phosphor umfasst sind.

3. Messinglegierung nach Anspruch 1 oder 2,
wobei im Gefüge der Anteil der β-Phase zwischen 40 und 50 % beträgt.

4. Messinglegierung nach einem der vorhergehenden Ansprüche,
wobei in einem Querschnitt der Flächenanteil der intermetallischen Phasen im Gefüge zwischen 11 und 17 % beträgt.

5. Messinglegierung nach einem der vorhergehenden Ansprüche,
wobei die intermetallischen Phasen im Gefüge überwiegend eine gestreckte, längliche Form besitzen.

6. Synchronring (10) aus einer Messinglegierung nach einem der vorhergehenden Ansprüche.

## Claims

1. Brass alloy comprising 55-68% by weight of copper, 3-6% by weight of aluminium, 8-14% by weight of manganese, 1.5-3% by weight of phosphorus, 0-1% by weight of lead, unavoidable impurities and the rest zinc.

2. Brass alloy according to Claim 1, comprising 59-64% by weight of copper, 3-4% by weight of aluminium, 9-11% by weight of manganese and 1.9-2.5% by weight of phosphorus.

3. Brass alloy according to Claim 1 or 2, in the structural make-up the fraction of the β-phase amounting to between 40 and 50%.

4. Brass alloy according to one of the preceding claims, in a cross section, the area fraction of the intermetallic phases in the structural make-up amounting to between 11 and 17%.

5. Brass alloy according to one of the preceding claims, the intermetallic phases in the structural make-up possessing predominantly an extended elongate form.

6. Synchronizing ring (10) consisting of a brass alloy according to one of the preceding claims.

## Revendications

1. Alliage de laiton comprenant 55-68 % en poids de cuivre, 3-6 % en poids d'aluminium, 8-14 % en poids de manganèse, 1,5-3 % en poids de phosphore, 0-1 % en poids de plomb, des impuretés inévitables et le reste étant du zinc.

2. Alliage de laiton selon la revendication 1, qui comprend 59-64 % en poids de cuivre, 3-4 % en poids d'aluminium, 9-11 % en poids de manganèse et 1,9-2,5 % en poids de phosphore.

3. Alliage de laiton selon la revendication 1 ou 2, dans lequel la proportion de phase β dans la microstructure est comprise entre 40 et 50 %.

4. Alliage de laiton selon l'une quelconque des revendications précédentes, dans lequel la proportion de surface des phases intermétalliques dans la microstructure dans une section transversale est comprise entre 11 et 17 %.

5. Alliage de laiton selon l'une quelconque des revendications précédentes, dans lequel les phases intermétalliques dans la microstructure présentent principalement une forme allongée étirée.

6. Bague de synchronisation (10) en un alliage de laiton selon l'une quelconque des revendications précédentes.
